# EUROPEAN PATENT SPECIFICATION

(11) **EP 1 963 160 B1**
(45) Date of publication and mention of the grant of the patent: **16.02.2011**
(21) Application number: 06812948.5
(22) Date of filing: 31.10.2006
(51) Int. Cl.: B61G 7/00, B61D 17/02

(54) **FRONT HATCH HAVING CANTILEVER HATCH-OPERATING MECHANISM**
FRONTLUKE MIT FREITRAGENDEM LUKENBETÄTIGUNGSMECHANISMUS
TRAPPE AVANT AYANT UN MECANISME DE FONCTIONNEMENT DE TRAPPE EN PORTE-A-FAUX

(30) Priority: 23.12.2005 SE 0502887
(43) Date of publication of application: 03.09.2008
(73) Proprietor: DELLNER COUPLERS AB, S-791 95 Falun (SE)
(72) Inventor: LUNDKVIST, Jonas, S-791 31 Falun (SE)
(74) Representative: Fröderberg, Anders Oskar
(86) International application number: PCT/SE2006/001223
(87) International publication number: WO 2007/073273

(56) References cited:
- EP-A1- 1 350 703
- EP-A2- 0 870 667
- DE-A1- 4 300 393
- DE-C- 735 049
- DE-C1- 4 445 182
- US-A- 2 859 705

## Description

### TECHNICAL FIELD OF THE INVENTION

The invention relates to a front hatch for the body of a railway vehicle, according to the characteristics of the preamble of independent claim 1. A coupler which is supported from the vehicle's chassis is covered behind the front hatch in the closed position, and is uncovered upon opening the front hatch in order to admit coupling to a connecting railway vehicle.

### BACKGROUND AND PRIOR ART

Railway vehicles, such as rail-bound motor coaches and train engines which are designed for a low air resistance, typically have a body with a streamlined nose that extends with a narrowing, streamlined shape around a coupler mechanism which is supported from the vehicle chassis. The couplers referred to comprise a coupler head arranged in a forward end of a tow bar, and which is structured to be detachably connected to a corresponding coupler head on a connecting vehicle. In couplers which are structured for automatic coupling, the coupler head is associated with hydraulically and pneumatically operated structures for mechanical and electrical connection of the vehicles. These structures and their associated supply lines, controls and drive means, are supported on the tow bar or on the coupler head, whereby the coupler mechanism as a whole can represent a comparatively complex and bulky structure

In uncoupled operation, i.e. when the coupler is inactive, the coupler and coupler head may be covered inside a hatch which is openable in the nose of the body. In order to take full advantage of the automatic coupler it is of course desired to remotely control the front hatch opening and closure from the vehicle's driver compartment.

An openable front hatch for a railway vehicle body is previously known, e.g. from EP 1 350 703 B1 which discloses a one piece hood member that is provided with a linkage mechanism for movement. The linkage mechanism is fully supported by the railway vehicle's coupler or by a frame structure connected to the coupler.

An openable front hatch for a railway vehicle is likewise known from EP 0 870 667 B1, comprising two front-end flaps and an actuating device comprising upper and lower coupling mechanisms including four-bar linkages arranged on both sides of the vehicle and through which each front-end flap is pivotable sideways into the vehicle body by operation of associated drives, respectively. This document represents the closest prior art according to the characteristics of the preamble of independent claim 1.

In the course of designing a hatch operating mechanism for the stated purpose, the skilled man faces the problem of designing a hatch movement in a narrow, limited space while considering the coupler and the coupler's supply system, drive- and control means, etc., and also other equipment supported internally on the body, such as supporting structures for the body, energy absorbing structures, head lights and other equipment present inside the body.

### THE INVENTION IN SUMMARY

According to the invention the problem is solved by designing a hatch operating mechanism as specified in the accompanying claims.

Briefly, a mechanism operative for opening and closure of a front hatch which is retractable into the body of a railway vehicle is disclosed, whereby in a closed position a coupler which is supported from the vehicle's chassis is covered behind the front hatch and which coupler upon opening of the front hatch is uncovered in order to admit coupling to a connecting railway vehicle, the front hatch comprising at least two separable sections that are pivotally supported on a cantilever beam which extends freely from the vehicle's chassis. In addition, the mechanism is characterized in that the hatch sections in a separated mode are retractable inside the body in a linear motion which is guided along the cantilever beam.

In a preferred embodiment, the hatch sections are pivotally journalled on a carriage which is supported on the cantilever beam, the carriage being controllable for reciprocating movements along the cantilever beam.

The cantilever beam preferably, from an inner end thereof which is connected to the vehicle's chassis, extends freely below the coupler and symmetrically along a centre line of the vehicle's chassis.

In an advantageous embodiment, the front hatch is sectioned through a sectioning line running in a vertical plane through the centre line of the vehicle's chassis, the hatch sections being movable in opposite directions towards the sides of the body, and in the separated mode retractable inside the body on separate sides of a coupler head while guided on the cantilever beam which is freely supported from the vehicle's body.

Preferably, the pivoting motions of the hatch sections are mutually synchronized. To this purpose, the hatch sections may be mechanically connected to each other and driven in synchronized pivoting motions about individual pivots.

In one embodiment, the pivoting motion of the hatch sections comprises a horizontal and a vertical component of direction. In addition thereto, the hatch sections are linearly displaceable on the carriage, in the length direction thereof.

According to one embodiment, the motions of the hatch sections are controlled by force in a supporting frame which is stationary attached to the carriage.

The opening and closure motions of the hatch sections are advantageously driven by pneumatic drive means, which by continuously applied pressure are operative also for holding the hatch sections in their open and closed end positions, respectively.

In one embodiment, the motions of the hatch sections in separation, closure, retraction and extension may be synchronized and sequentially controlled.

In one embodiment, the hatch sections may be arranged to form a forward portion of a front hatch, which portion is retractable inside the vehicle's body in a non-separated mode.

### SHORT DESCRIPTION OF THE DRAWINGS

Embodiments of the invention are more closely described below, with reference made to the accompanying drawings. In the drawings,
Fig. 1 shows a hatch operating mechanism according to the invention in a side projection view;
Fig. 2 shows the top side of the hatch operating mechanism of fig. 1 in a horizontal projection, and in a closed end position;
Fig. 3 shows the hatch operating mechanism in a front view;
Fig. 4 shows the hatch operating mechanism of figs. 1-3 in an open end position, and
Fig. 5 shows an alternative embodiment of the hatch operating mechanism in a horizontal projection.

### DETAILED DESCRIPTION OF THE INVENTION

A mechanism for operating a front hatch in the body of a railway vehicle is illustrated in the drawings, wherein the outlines of the vehicle body, the vehicle's chassis, as well as a coupler supported from the chassis, are schematically illustrated in dash-dot lines where appropriate.

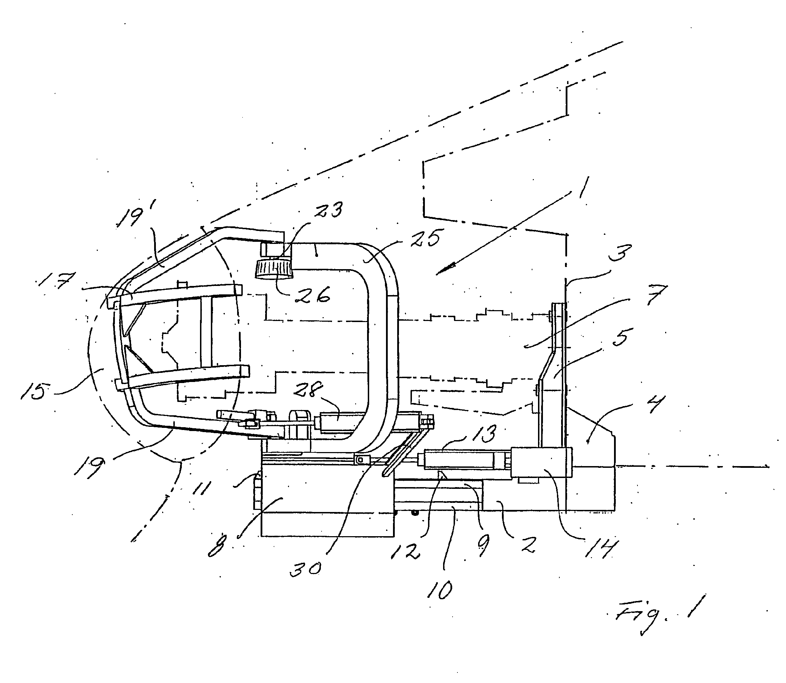

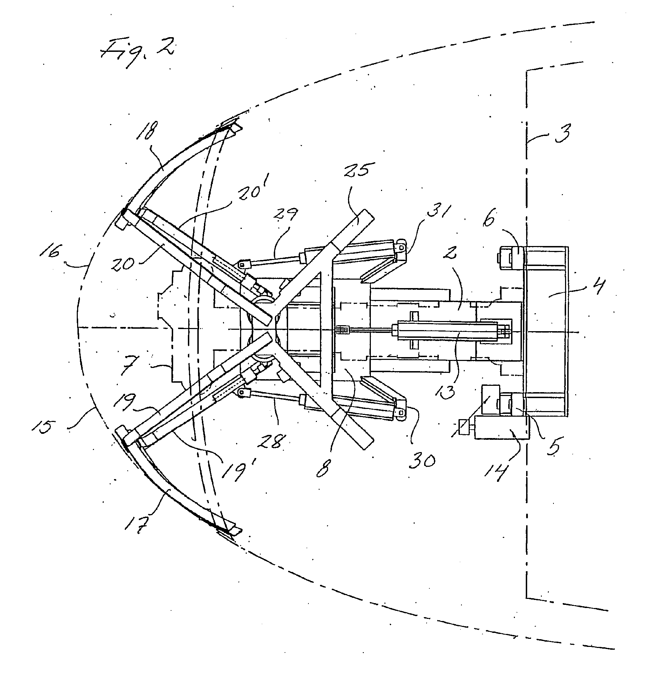

One embodiment of a hatch operating mechanism 1 according to the invention is described with reference to figs. 1-4. Upon opening of the front hatch, the hatch operating mechanism 1 is arranged to move into the vehicle body under guidance from a cantilever beam 2. In one inner end only, the beam 2 is mounted to the vehicle chassis 3 through attachment means that is designed and adapted to fit the subject vehicle chassis. In the illustrated embodiment, the attachment comprises a transverse box or beam 4 having legs 5 and 6 projecting upwards from its ends, the legs being arranged to be bolted to the vehicle chassis on each side of a coupler 7 extending from the chassis. As illustrated in the drawings, the beam 4 is advantageously formed to extend under the vehicle chassis for a length thereof, this way forming a base for the inner end of the cantilever beam 2 which also may be inserted under the chassis. The cantilever beam 2 is extended from the vehicle chassis with a forward end thereof extending freely in the axial direction of the vehicle chassis. Preferably, the cantilever beam 2 extends symmetrically with respect to a centre axis of the vehicle chassis, and in the preferred embodiment below the coupler 7. Notwithstanding the cantilever beam 2 in this embodiment being shown as a one-piece, elongate element, it will be appreciated that the invention may be realized through embodiments wherein the cantilever beam comprises two or more elongate elements running in parallel.

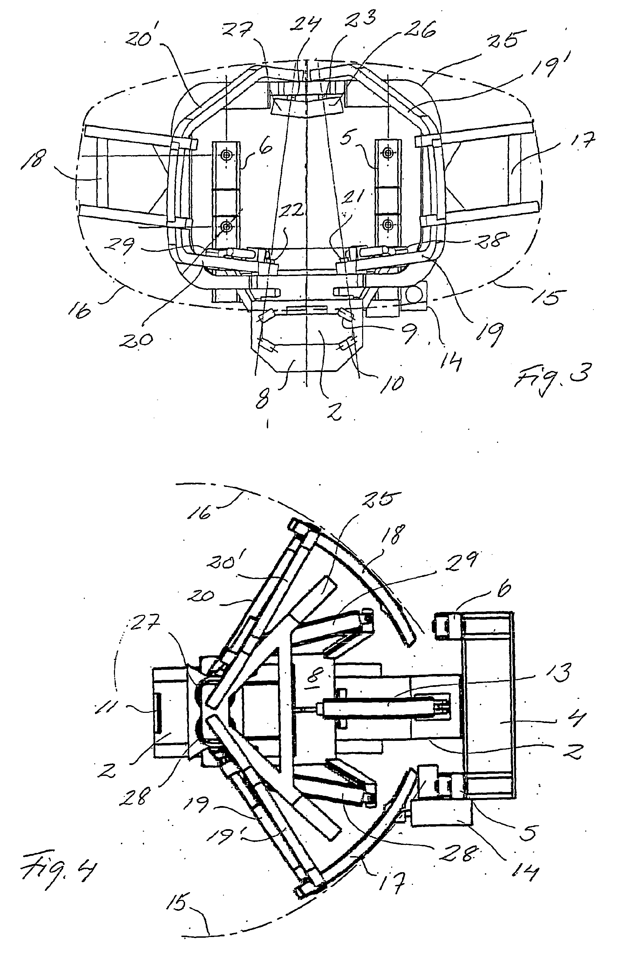

The hatch operating mechanism 1 is supported for movement on the cantilever beam 2 by means of a carriage 8 which is guided for movement in the axial direction of the cantilever beam. The carriage 8 may be arranged as a sledge with plain bearings for sliding movement on the cantilever beam 2. Preferably though, the carriage 8 is supported on the cantilever beam 2 by means of rolls, roller bearings or wheels that are resting onto roller beds formed on the beam 2. As apparent especially from fig. 3, the cantilever beam may comprise on each side thereof an upper and a lower roller bed 9 and 10, respectively, that in a cross sectional view are slanting relative to each other in directions that intersect at a point of intersection which is positioned laterally from the side of the cantilever beam. The carriage 8 is arrested on the cantilever beam through a pair of wheels contacting in coaxial relation the roller beds 9,10, the carriage however movable in the axial direction of the cantilever beam, linearly between a front and a rear end position. "Coaxial" is used in this connection to describe that the carriage 8 encloses the cantilever beam 2 and contacts the beam, not only in one but at intersecting radial directions as seen in a cross sectional view. The end positions of the carriage's movement may be defined through mechanical end stops 11 and 12, or through sensors that control a drive means which is operative for moving the carriage on the cantilever beam.

The carriage 8 is controlled for movement on the cantilever beam 2 together with other details of the hatch operating mechanism described below. The movement is driven by drive means that are electrically or hydraulically operated, such as a rotary screw, or preferably through pneumatically operated drive means 13 such as the double-acting piston/cylinder unit 13 shown in the illustrated embodiment. For this purpose the suitable motors, switches and valves are provided and preferably assembled on the cantilever beam or on the beam's attachment, as indicated by reference number 14 in the illustrated embodiment. For reasons of clearness, necessary cables and lines for power supply and control are omitted from the drawings.

Other movable details of the hatch operating mechanism are supported on the carriage 8 to be brought along when the carriage moves inwards in the opening motion, or outwards in the closure motion of the front hatch.

It will be appreciated, that in alternative to the carriage 8 described above which is movable on the cantilever beam 2, the movable details of the hatch operating mechanism may be arranged and supported directly or indirectly by an expandable or telescopic arm which is freely extending from the vehicle's chassis in correspondence with the cantilever beam 2 of the illustrated embodiment.

According to the invention, the front hatch or at least a forward portion thereof is divided into a first hatch section 15 and a second hatch section 16. The hatch sections are illustrated in the drawings through dash-dotted lines. The illustrated front hatch is divided symmetrically through a sectioning line that runs in a vertical plane through a centre line of the vehicle chassis, and the first hatch section is a mirrored view of the second section. Completely symmetrical and identically shaped hatch sections is however not an unconditional requirement for using the invention and in order to make possible, during opening thereof, the motion pattern that provides the hatch sections a movement into the vehicle's body under guidance from a cantilever beam that extends freely from the vehicle chassis.

The hatch sections 15 and 16 are supported in hatch frames 17 and 18, respectively, the latter being movably arranged on the carriage 8. In the illustrated embodiment, each hatch frame 17,18 is connected to the outer ends of operating arms 19 and 20, respectively, the inner ends of which are journalled on the carriage 8 for pivoting motions. The operating arms 19, 20 are pivoting about pivot axes having an inclination relative to the vertical which is determined with respect to a desired movement pattern, which in the illustrated embodiment includes substantially opposing directions of movement towards the sides of the vehicle body. It will be appreciated that the front hatch sections 15, 16 move in horizontal paths when pivoted about vertical axes, and that the movement patterns may include a vertical component by arranging the pivot axes so as to deviate from the vertical, if so desired.

More specifically, each one of said operating arms 19, 20 comprises on one hand a lower operating arm 19, 20, and on the other hand an upper operating ram 19' and 20'. In the inner ends thereof, the lower operating arms 19, 20 are pivotable about pivots 21 and 22 (visible in fig. 3) that are arranged on the carriage 8, whereas the upper operating arms 19' and 20', in the inner ends thereof, are pivotable about pivots 23 and 24 that are arranged in a supporting frame 25 which is standing on the carriage 8.

It is preferred that the hatch sections 15 and 16 are mutually synchronized in opening and closure movements. In the illustrated embodiment, this synchronization is realized mechanically through a pair of inter-engaging gear wheels 26 and 27, each one of which is non-rotationally connected to the operating arms 19' and 20', respectively, or otherwise to the pivots 23 and 24 of the operating arms. Alternatively, the synchronized movements of the hatch sections may be realized through the control of drive means for the hatch section movements in response to a continuous detection of the positions of the hatch sections.

The pivoting of the hatch sections may be driven electrically, hydraulically or as preferred pneumatically through drive means which are arranged to act upon, or to act between the operating arms 19, 20 or 19', 20'. In the illustrated embodiment, the operating arms are individually associated with double-acting piston/cylinder units 28 and 29, arranged to operate between the operating arms 19, 20 and a pair of struts 30 and 31, respectively, arranged on the carriage 8. In embodiments wherein the hatch sections 15, 16 are mechanically interconnected for synchronized pivoting movements as explained above, a singular drive means 28 or 29 may alternatively be used and operative for simultaneous pivoting of both hatch sections.

The drive means 28, 29 may be controlled in response to a detected position of the hatch sections, to which purpose position sensing means are arranged to detect, e.g., an angular displacement at the pivots 21, 22. Likewise, the drive means 13 for the axial movement of the hatch operating mechanism on the cantilever beam 2 may be controlled in response to a detected position of the hatch sections. Through this measure, another possibility for synchronization of the opening and closure movements of the hatch sections is achievable. Accordingly, a pivoting movement as well as a linear movement can be stepwise driven, e.g., or driven at varying speed, and continuously adapted to the current angular position of the hatch sections, and/or the current axial position in the length direction of the vehicle. Such coordination or shifting between the movements can be required, e.g., in order to control the hatch sections upon passage of a coupler head or other equipment on the coupler, as well as for passing other equipment arranged inside the vehicle body.

Referring to the drawing figures, the hatch operating mechanism is shown in the closed position (fig. 1-3), and in an open position (fig. 4). In both positions, corresponding drive means can be used and operative for holding movable components in the subject position. In addition, further mechanical or electromechanical arresting means, not further shown, can be used to prevent involuntary opening or closure of the front hatch as a measure of security against malfunction or power loss in the drive means, which in case of pneumatic operation are continuously pressurized in order to maintain the set position.

In the closed position the hatch sections 15, 16 are arranged, in the illustrated embodiment, to seal from inside against the edges of an opening which is formed in the front of the body. For this reason, advantageously, the opening sequence of the front hatch may include an initial step wherein the hatch sections, still non-separated, are pulled in towards the vehicle chassis for a short length. Then, the hatch sections are driven to pivot in mutually opposite directions for separation, where after they are pulled further into the vehicle body on opposite sides of the coupler, to the opened end position. The closure sequence is performed in the reverse order.

In an alternative embodiment the front hatch sections are instead arranged in closed position to seal from outside against the edges of an opening which is formed in a one piece, ring-shaped portion of the front hatch, which is movable and retractable into the body together with the sections during opening.

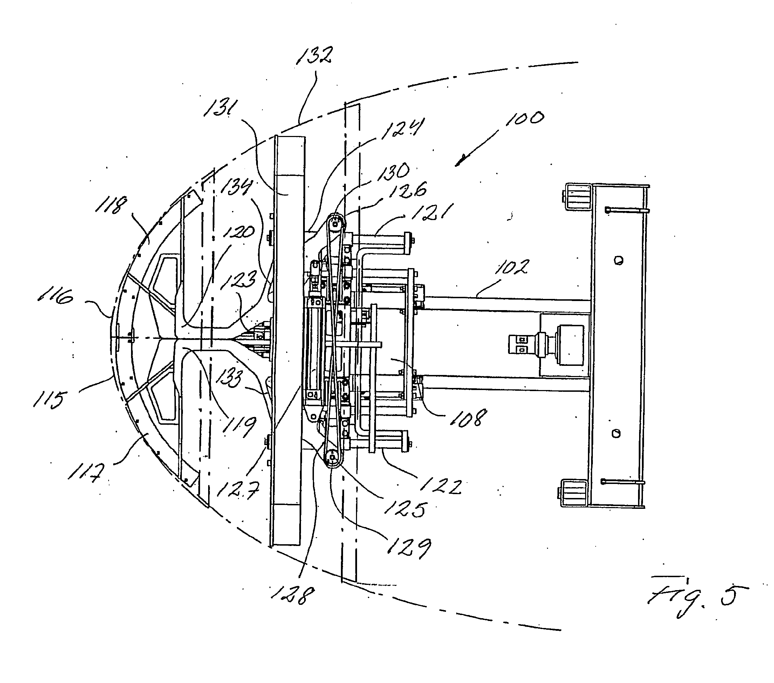

With reference to fig. 5, a hatch operating mechanism 100 is shown and which is controlled and driven for movement on a cantilever beam 102 that is freely supported from the vehicle chassis, in accordance with the previous embodiment. A front hatch is divided into sections 115 and 116 that are movable in mutually opposite directions and in a separated mode are retractable into the vehicle body during opening. The hatch sections 115, 116 are supported from hatch frames 117, 118 that are connected to operating arms 119, 120, respectively. The operating arms are movably supported on a carriage 108 which is controlled by the freely extending beam 102. More specifically, the hatch sections 115, 116, hatch frames 117, 118, and operating arms 119, 120 are received in guides 121, 122 for linear movements relative to the carriage 108, in the axial direction of the same. The movements in the axial direction of the carriage is driven and controlled by drive means 123, in the illustrated embodiment a double-acting, preferably pneumatically operated piston/cylinder unit 123. The guides 121, 122 supports a sledge 124 in sliding relation, onto which sledge the inner ends of the operating arms 119, 120 are pivotally journalled about pivots 125 and 126, respectively. A double-acting, preferably a pneumatically operated piston/cylinder unit 127 is positioned to operate between the operating arms and effective for pivoting the hatch sections 115, 116 in opening/closure movements. The pivoting movements of the operating arms are synchronized by means of a chain 128 that runs over gear wheels 129, 130 that are non-rotationally attached to the operating arms, concentrically with their respective pivots 125 and 126. A supporting frame 131, which carries the non-divided portion 132 of the front hatch, is stationary supported on the carriage 108. In addition, the support frame 131 may comprise guide pins (not visible) that engage into slots 133, 134 that are formed in the operating arms 119, 120 and which in cooperation are effective for guiding by force the hatch frames upon their displacement along the guides 121, 122 relative to the support frame 131 which is stationary of the carriage 108.

The operation upon opening of the alternative embodiment comprises an initial step wherein the hatch sections are pushed forward in the length direction of the vehicle. Then, the hatch sections are pivoted outwards in opposite directions to a separated position wherein the hatch sections are placed outwardly of the ring-shaped portion of the front hatch. In a second step, the hatch sections are pulled towards the vehicle chassis together with the ring-shaped portion, under guidance from the cantilever beam which is freely extending from the vehicle chassis. In a final step, the pivoting elements of the hatch operating mechanism are further retracted inwards on the carriage which has now stopped, until the end position is reached. The closure sequence is performed in the reverse order.

A central feature in the invention is that the hatch operating mechanism is supported for axial movement on a cantilever beam that is freely extending from the vehicle chassis, which is this connection means that the beam extends from an inner end thereof which is connected to the vehicle chassis. In other words, the front hatch and its operating mechanism is independent from the coupler and the vehicle body, and accordingly the same do not carry any load from the front hatch and the hatch operating mechanism.

In both illustrated embodiments it is further a central feature that the front hatch is divided into sections that are movable into the body in a separated mode, while passing the coupler head that is supported on the coupler. The illustrated examples include a pivoting movement for the hatch sections, but shall however not exclude the possibility of employing the invention in applications including only a linear movement for the hatch sections, or a combination of pivoting and linear movements for separation of hatch sections that are retractable into the vehicle body in a separated mode.

Modifications that seem obvious for a person skilled in this art comprises, e.g., a front hatch that is divided horizontally to have at least two sections that are movable to be separated upon opening, and supported from a cantilever beam that is freely extended from the vehicle chassis. In such case, an upper hatch section may be pivotally arranged and/or linearly movable on an element that is supported on the cantilever beam, in correspondence with the supporting beam 25 or the supporting frame 131 of the illustrated examples, and retractable into the vehicle body above the coupler head, as well as a lower hatch section that is supported in a corresponding way, directly or indirectly, on a sledge or carriage 8, 108 so as to be retractable below the coupler in the opening sequence. Another plausible modification includes a front hatch that is divided horizontally into an upper and a lower section, of which the lower section is further divided vertically, and wherein the upper section during opening moves in a pathway above the coupler head and the lower sections move on opposite sides of the coupler head in a separated mode.

## Claims

1. A front hatch for the body of a railway vehicle, said front hatch comprising at least two separable front hatch sections (15,16; 115,116) that are pivotally supported on a cantilever beam (2; 102) and operable between open and closed modes, **characterized in that** the front hatch sections (15,16; 115,116) are in a separated mode linearly movable along the cantilever beam (2; 102).

2. The front hatch of claim 1, **characterized in that** the front hatch sections (15,16; 115,116) are pivotally journalled on a carriage (8;108) which is supported on the cantilever beam (2; 102), said carriage being controllable for reciprocating movement along the cantilever beam.

3. The front hatch of claim 1 or 2, **characterized in that** the cantilever beam (2; 102) extends freely from an inner end thereof which is connectable to a vehicle's chassis, preferably underneath a coupler extending from the vehicle chassis.

4. The front hatch of any of claims 1 to 3, **characterized in that** the front hatch is sectioned through a sectioning line running vertically through the centre of the front hatch, the front hatch sections (15,16; 115,116) being separable in opposite directions from the sectioning line, and in the separated mode retractable on opposite sides of the cantilever beam (2; 102).

5. The front hatch of claim 4, **characterized in that** the pivoting motions of the hatch sections (15,16; 115,116) are mutually synchronized.

6. The front hatch of claim 5, **characterized in that** the hatch sections (15,16; 115,116) are mechanically connected to each other and driven in synchronized pivoting motions about individual pivots.

7. The front hatch of claim 4, **characterized in that** the pivoting motion of the hatch section (15,16; 115,116) comprises a horizontal and a vertical component of direction.

8. The front hatch of claim 4, **characterized in that** the hatch sections (115,116) in addition are linearly displaceable in the length direction of the carriage (108).

9. The front hatch of claim 8, **characterized in that** the motions of the hatch sections (115,116) are controlled by force in a supporting frame (131) which is stationary attached to the carriage (108).

10. The front hatch of any previous claim, **characterized in that** the opening and closure motions are driven by pneumatic drive means, which by a continuously applied pressure is operative also for holding the front hatch sections (15,16; 115,116) in their open and their closed end positions, respectively.

11. The front hatch of any previous claim, **characterized in that** the motions of the hatch sections (15,16; 115,116) in separation, closure, retraction and extension are synchronized and sequentially controlled.

## Patentansprüche

1. Frontklappe für den Rumpf eines Schienenfahrzeugs, wobei die Frontklappe mindestens zwei trennbare Frontklappen-Teilabschnitte (15, 16; 115, 116) umfasst, die schwenkbar auf einem Ausleger (2; 102) getragen werden und zwischen geöffneten und geschlossenen Betriebsarten zu betätigen sind, **dadurch gekennzeichnet, dass** die Frontklappen-Teilabschnitte (15, 16; 115, 116) in einer separierten Betriebsart linear an dem Ausleger (2; 102) entlang bewegbar sind.

2. Frontklappe nach Anspruch 1, **dadurch gekennzeichnet, dass** die Frontklappen-Teilabschnitte (15, 16; 115, 116) auf einem Schlitten(8; 108) schwenkbar gelagert sind, der auf dem Ausleger (2; 102) getragen wird, wobei der Schlitten für eine hin- und hergehende Bewegung an dem Ausleger entlang steuerbar ist.

3. Frontklappe nach Anspruch 1 oder 2, **dadurch gekennzeichnet, dass** der Ausleger (2; 102) sich frei von einem inneren Ende desselben aus erstreckt, das mit einem Fahrzeugfahrgestell verbindbar ist, bevorzugt unterhalb einer Wagenkupplung, die sich von dem Fahrzeugfahrgestell aus erstreckt.

4. Frontklappe nach einem der Ansprüche 1 bis 3, **dadurch gekennzeichnet, dass** die Frontklappe durch eine Trennlinie unterteilt wird, die vertikal durch die Mitte der Frontklappe geht, wobei die Frontklappen-Teilabschnitte (15, 16; 115, 116) in entgegengesetzten Richtungen von der Trennlinie trennbar sind und in der separierten Betriebsart auf gegenüberliegenden Seiten des Ausleger (2; 102) einziehbar sind.

5. Frontklappe nach Anspruch 4, **dadurch gekennzeichnet, dass** die Schwenkbewegungen der Klappenteilabschnitte (15, 16; 115, 116) gegenseitig synchronisiert sind.

6. Frontklappe nach Anspruch 5, **dadurch gekennzeichnet, dass** die Klappenteilabschnitte (15, 16; 115, 116) mechanisch miteinander verbunden sind und in synchronisierten Schwenkbewegungen um individuelle Drehzapfen angetrieben werden.

7. Frontklappe nach Anspruch 4, **dadurch gekennzeichnet, dass** die Schwenkbewegung des Klappenteilabschnitts (15, 16; 115, 116) eine horizontale und eine vertikale Richtungskomponente umfasst.

8. Frontklappe nach Anspruch 4, **dadurch gekennzeichnet, dass** die Klappenteilabschnitte (115, 116) zudem linear in der Längsrichtung des Schlittens (108) verschiebbar sind.

9. Frontklappe nach Anspruch 8, **dadurch gekennzeichnet, dass** die Bewegungen der Klappenteilabschnitte (115, 116) zwangsweise in einem Stützrahmen (131) gesteuert werden, der ortsfest an dem Schlittens (108) angebracht ist.

10. Frontklappe nach einem der vorhergehenden Ansprüche, **dadurch gekennzeichnet, dass** die Öffnungs- und Schließbewegungen durch ein Luftdruck-Antriebsmittel angetrieben werden, das durch kontinuierlich angelegten Druck auch betriebsfähig ist, um die Frontklappen-Teilabschnitte (15, 16; 115, 116) jeweils in ihren geöffneten bzw. verschlossenen Positionen zu halten.

11. Frontklappe nach einem der vorhergehenden Ansprüche, **dadurch gekennzeichnet, dass** die Bewegungen der Klappenabschnitte (15, 16; 115, 116) beim Trennen, Verschließen, Zurückziehen und Ausfahren synchronisiert und sequentiell gesteuert werden.

## Revendications

1. Trappe avant pour le corps d'un véhicule ferroviaire, ladite trappe avant comprenant au moins deux sections de trappe avant séparables (15, 16 ; 115, 116) qui sont supportées de manière pivotante sur une poutre en porte-à-faux (2 ; 102) et opérationnelles entre les modes ouvert et fermé, **caractérisée en ce que** les sections de trappe avant (15, 16 ; 115, 116) sont, dans un mode séparé, mobiles de manière linéaire le long de la poutre en porte-à-faux (2 ; 102).

2. Trappe avant selon la revendication 1, **caractérisée en ce que** les sections de trappe avant (15, 16 ; 115, 116) sont tourillonnées de manière pivotante sur un chariot (8 ; 108) qui est supporté sur la poutre en porte-à-faux (2 ; 102), ledit chariot pouvant être commandé pour effectuer un mouvement de va-et-vient le long de la poutre en porte-à-faux.

3. Trappe avant selon la revendication 1 ou 2, **caractérisée en ce que** la poutre en porte-à-faux (2 ; 102) s'étend librement à partir de son extrémité interne qui peut être raccordée au châssis d'un véhicule, de préférence au-dessous d'un attelage s'étendant à partir du châssis de véhicule.

4. Trappe avant selon l'une quelconque des revendications 1 à 3, **caractérisée en ce que** la trappe avant est sectionnée par le biais d'une ligne de sectionnement s'étendant verticalement à travers le centre de la trappe avant, les sections de trappe avant (15, 16 ; 115, 116) étant séparables dans des directions opposées à la ligne de sectionnement, et dans le mode séparé, rétractables sur les côtés opposés de la poutre en porte-à-faux (2 ; 102).

5. Trappe avant selon la revendication 4, **caractérisée en ce que** les mouvements de pivotement des sections de trappe (15, 16 ; 115, 116) sont mutuellement synchronisés.

6. Trappe avant selon la revendication 5, **caractérisée en ce que** les sections de trappe (15, 16 ; 115, 116) sont mécaniquement raccordées entre elles et entraînées selon des mouvements de pivotement synchronisés autour de pivots individuels.

7. Trappe avant selon la revendication 4, **caractérisée en ce que** le mouvement de pivotement de la section de trappe (15, 16 ; 115, 116) comprend un composant de direction horizontal et vertical.

8. Trappe avant selon la revendication 4, **caractérisée en ce que** les sections de trappe (115, 116) sont en plus linéairement déplaçables dans la direction de la longueur du chariot (108).

9. Trappe avant selon la revendication 8, **caractérisée en ce que** les mouvements des sections de trappe (115, 116) sont contrôlés par la force dans un châssis de support (131) qui est fixé de manière fixe sur le chariot (108).

10. Trappe avant selon l'une quelconque des revendications précédentes, **caractérisée en ce que** les mouvements d'ouverture et de fermeture sont entraînés par des moyens d'entraînement pneumatiques qui, par une pression appliquée de manière continue, sont opérationnels également pour maintenir les sections de trappe avant (15, 16 ; 115, 116) dans leurs positions d'extrémité ouverte et fermée, respectivement.

11. Trappe avant selon l'une quelconque des revendications précédentes, **caractérisée en ce que** les mouvements des sections de trappe (15, 16 ; 115, 116) en séparation, fermeture, rétraction et extension sont synchronisés et séquentiellement contrôlés.
